# EUROPEAN PATENT APPLICATION

(11) **EP 4 224 681 A1**
(43) Date of publication of application: **09.08.2023**
(21) Application number: 21874971.1
(22) Date of filing: 23.08.2021
(51) Int. Cl.: H02K 5/08, F16K 31/04, H02K 5/12

(54) **STATOR UNIT AND ELECTRIC VALVE**

(30) Priority: 30.09.2020 JP 2020164879
(71) Applicant: Fujikoki Corporation, Tokyo 158-0082 (JP)
(72) Inventor: YOSHIDA, Tatsuya, Tokyo 158-0082 (JP); MATSUBARA, Yuta, Tokyo 158-0082 (JP)
(74) Representative: Ter Meer Steinmeister & Partner
(86) International application number: PCT/JP2021/030756
(87) International publication number: WO 2022/070668

(57) **Abstract**

[Object] To provide a stator unit capable of suppressing formation of a weld line and an electric valve including the stator unit.

[Solution] A stator unit (50) of an electric valve (1) includes a stator (60), a housing (70), and a case (80). The housing (70) integrally includes a peripheral wall portion (71), an upper wall portion (72), a dome portion (73), and a connecting portion (75). The connecting portion (75) includes a tip end portion (76) and a top plate portion (77). The tip end portion (76) projects from the peripheral wall portion (71) in a lateral direction. The top plate portion (77) projects upward from the upper wall portion (72). A protrusion (78) is provided on a central part of an upper surface (77a) of the top plate portion (77) in a width direction and extends between the dome portion (73) and the tip end portion (76).

## Description

### Technical Field

The present invention relates to a stator unit and an electric valve.

### Background Art

Patent Literature 1 discloses an example of an electric valve according to the related art. The electric valve in Patent Literature 1 includes a magnet rotor and a permanent magnet that rotates with the magnet rotor. The magnet rotor and the permanent magnet are disposed inside a can. A magnetic sensor is disposed outside the can. The electric valve detects magnetism of the permanent magnet by the magnetic sensor to obtain a rotational angle of the magnet rotor.

### Citation List

### Patent Literature

Patent Literature 1: Japanese Unexamined Patent Application Publication No. 2018-179133

### Summary of Invention

### Technical Problem

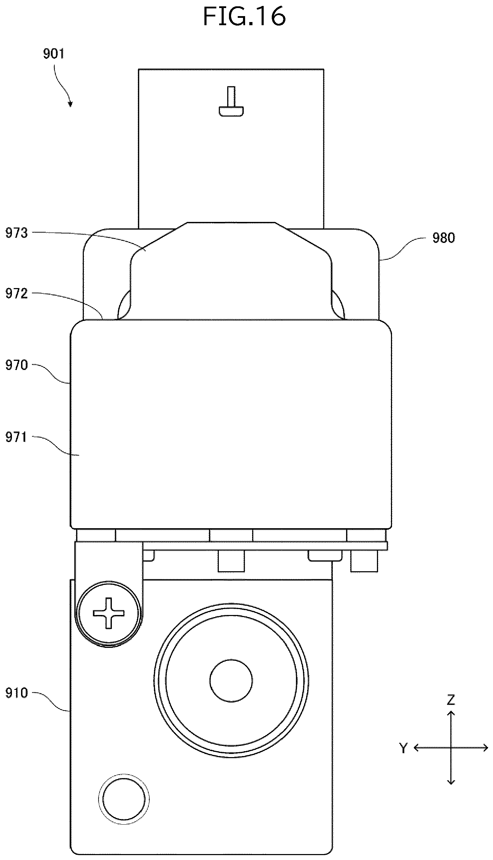

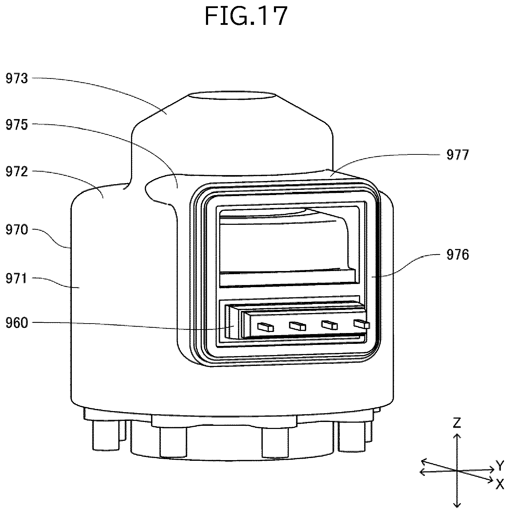

Fig. 16 and Fig. 17 illustrate another electric valve 901 according to the related art. The electric valve 901 obtains a rotational angle of a magnet rotor in a similar way to the electric valve in Patent Literature 1. The electric valve 901 includes a valve body 910, a stator 960, a housing 970, and a case 980. The housing 970 includes a peripheral wall portion 971, an upper wall portion 972, a dome portion 973, and a connecting portion 975. The connecting portion 975 has a quadrangular tubular shape extending in a lateral direction (X direction). The connecting portion 975 includes a tip end portion 976 projecting from the peripheral wall portion 971 in the lateral direction. The case 980 is bonded to the tip end portion 976. The connecting portion 975 includes a top plate portion 977 in a flat plate-like shape projecting upward from the upper wall portion 972 (Z direction).

The housing 970 is made of synthetic resin. The housing 970 is formed by injection molding. In the formation of the housing 970 by injection molding, a relatively large weld line may be formed in the central part of the top plate portion 977 of the connecting portion 975 in a width direction (Y direction). Therefore, there is a possibility that a crack occurs along the weld line.

Accordingly, it is an object of the present invention to provide a stator unit capable of suppressing formation of a weld line, and an electric valve that includes the stator unit.

### Solution to Problem

To achieve the object described above, a stator unit according to an aspect of the present invention includes a stator, a housing that houses the stator and is made of resin, and a case that is bonded to the housing and is made of resin. The housing integrally includes a peripheral wall portion, an upper wall portion that is connected to the peripheral wall portion, a dome portion that projects upward from the upper wall portion, and a connecting portion in a quadrangular tubular shape that extends in a lateral direction. The connecting portion includes a tip end portion to which the case is bonded, and a top plate portion in a flat plate-like shape that projects upward from the upper wall portion. The tip end portion projects from the peripheral wall portion in the lateral direction. A protrusion is provided in a central part of an upper surface of the top plate portion in a width direction and extends between the dome portion and the tip end portion.

According to the present invention, the housing includes the connecting portion in the quadrangular tubular shape that extends in the lateral direction. The tip end portion of the connecting portion projects from the peripheral wall portion of the housing in the lateral direction. The top plate portion of the connecting portion has the flat plate-like shape and projects upward from the upper wall portion of the housing. The protrusion is provided on the central part of the upper surface of the top plate portion in the width direction (a direction orthogonal to an extending direction of the connecting portion), and the protrusion extends between the dome portion on the upper wall portion and the tip end portion of the connecting portion. As a result, the central part of the top plate portion in the width direction has a thickness greater than that of the end parts of the top plate portion in the width direction, and a resin is likely to flow into the central part of the top plate portion in the width direction during formation of the housing by injection molding. Therefore, the resin flows into the central part of the top plate portion in the width direction, then the resin spreads to both end parts of the top plate portion in the width direction, and it is possible to suppress formation of a weld line in the central part.

In the present invention, preferably, a concave surface is provided in a connecting part in which the upper wall portion is connected to the connecting portion and extends in the lateral direction. With this configuration, the connecting part has a small thickness and sink marks of the resin in the connecting part can be suppressed compared with a configuration with a raised connecting part, in which the upper wall portion of the housing is connected to the connecting portion of the housing.

In the present invention, preferably, the tip end portion of the connecting portion includes a housing bonding surface in a quadrangular frame shape, and a housing reference surface in a quadrangular frame shape that encloses the housing bonding surface. Preferably, the case includes a case bonding surface in a quadrangular frame shape that is bonded to the housing bonding surface, and a case reference surface that encloses the case bonding surface and is in contact with the housing reference surface. Preferably, a first slot is provided in a central part of an upper side of the case reference surface, and a second slot is provided in a central part of a lower side of the case reference surface. The weld line is likely to be formed in the central part of the tip end portion of the connecting portion in the width direction. Even if the central part of the upper side of the housing reference surface and the central part of the lower side of the housing reference surface are raised by weld lines, the first slot in the central part of the upper side of the case reference surface and the second slot in the central part of the lower side of the case reference surface can inhibit portions of the housing reference surface that are raised from coming into contact with the case reference surface. Therefore, the housing reference surface is in proper contact with the case reference surface, and the case can be appropriately bonded to the housing.

In the present invention, preferably, a lower surface of the top plate portion is located at a position higher than an upper surface of the upper wall portion. With this configuration, the connecting portion is enlarged in an up-down direction, and the tip end portion of the connecting portion can be enlarged. Therefore, the housing bonding surface and the case bonding surface can be enlarged, resulting in firmer bonding of the case to the housing.

In the present invention, preferably, the case integrally includes a case body in a box shape and a connector in a tubular shape. Preferably, the case body includes a first wall portion that includes the case bonding surface and the case reference surface, and a second wall portion from which the connector extends, and the second wall portion is connected to the first wall portion of the case body. Preferably, a first rib is provided on an outer surface of the first wall portion and extends between the case reference surface and a connecting part in which the first wall portion is connected to the second wall portion. Preferably, a second rib is provided between an outer surface of the second wall portion and an outer circumferential surface of the connector. Preferably, when viewed in a direction of an axis of the connector, the connector is between the first rib and the second rib. With this configuration, it is possible to inhibit the connector from tilting with respect to the case body when the resin cures during formation of the case by injection molding.

To achieve the object described above, an electric valve according to another aspect of the present invention includes a valve body, a can that is bonded to the valve body, and a stator unit in which the can is housed. The stator unit is the stator unit described above. As a result, it is possible to suppress the formation of the weld line in the housing of the stator unit.

### Advantageous Effects of Invention

According to the present invention, it is possible to suppress the formation of the weld line in the housing of the stator unit.

### Brief Description of Drawings

[Fig. 1] Fig. 1 is a front view of an electric valve according to an embodiment of the present invention.
[Fig. 2] Fig. 2 is a right-side view of the electric valve in Fig. 1.
[Fig. 3] Fig. 3 is a back view of the electric valve in Fig. 1.
[Fig. 4] Fig. 4 is a left-side view of the electric valve in Fig. 1.
[Fig. 5] Fig. 5 is a plan view of the electric valve in Fig. 1.
[Fig. 6] Fig. 6 is a bottom view of the electric valve in Fig. 1.
[Fig. 7] Fig. 7 is a longitudinal sectional view of the electric valve in Fig. 1.
[Fig. 8] Fig. 8 is a sectional view taken along line VIII-VIII of Fig. 7.
[Fig. 9] Fig. 9 is a perspective view of the electric valve in Fig. 1 as viewed from an upper right front side.
[Fig. 10] Fig. 10 is a perspective view of the electric valve in Fig. 1 as viewed from a lower left front side.
[Fig. 11] Fig. 11 is a perspective view of the electric valve in Fig. 1 as viewed from an upper left back side.
[Fig. 12] Fig. 12 is a perspective view of the electric valve in Fig. 1 as viewed from a lower left back side.
[Fig. 13] Fig. 13 is a perspective view of a stator and a housing of a stator unit of the electric valve in Fig. 1.
[Fig. 14] Fig. 14 is a perspective view of the stator of the stator unit of the electric valve in Fig. 1.
[Fig. 15] Fig. 15 is a perspective view of a case body and a connector of the stator unit of the electric valve in Fig. 1.
[Fig. 16] Fig. 16 is a left-side view of an electric valve according to the related art.
[Fig. 17] Fig. 17 is a perspective view of a stator and a housing of a stator unit of the electric valve in Fig. 16.

### Description of Embodiments

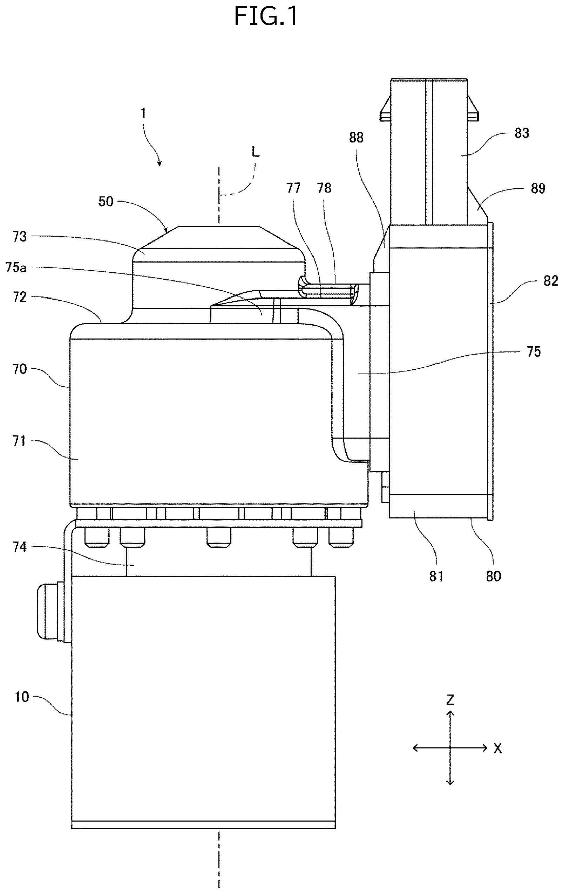

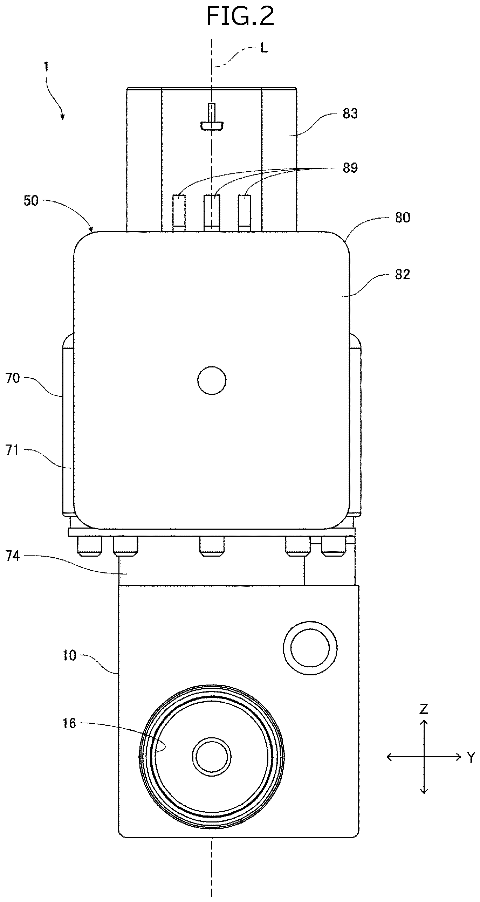

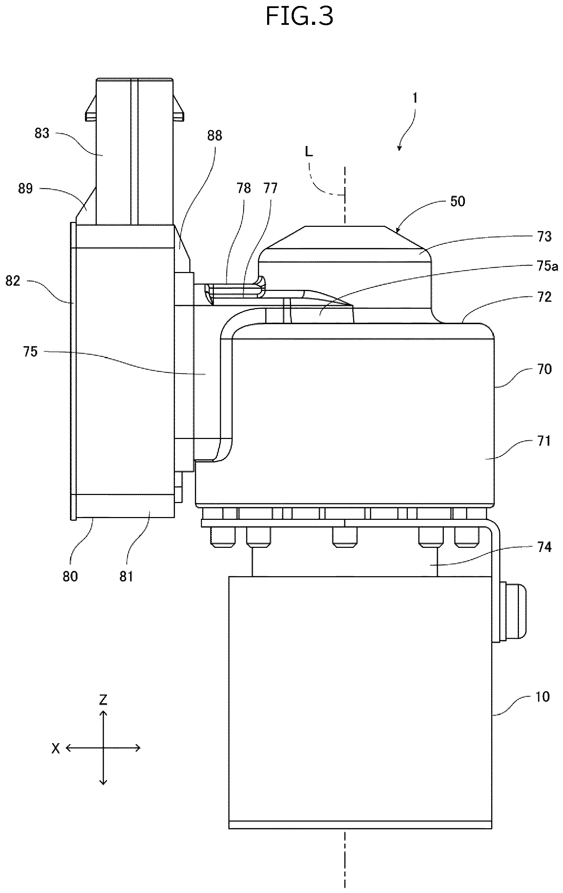

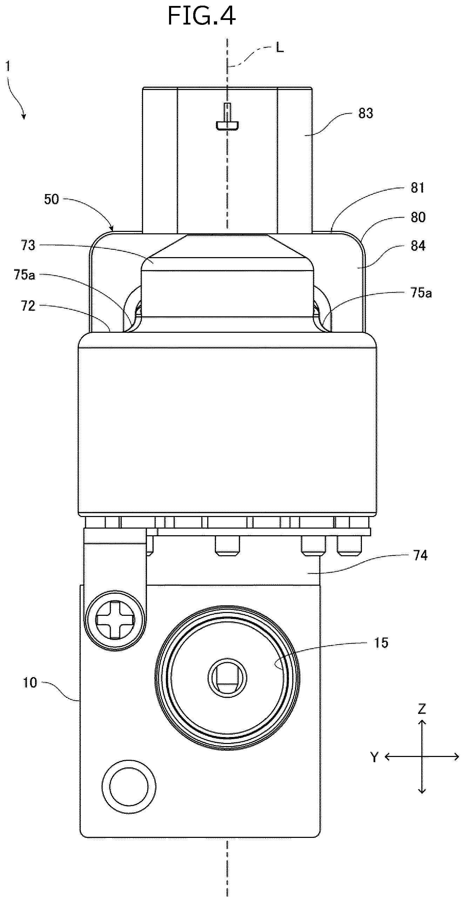

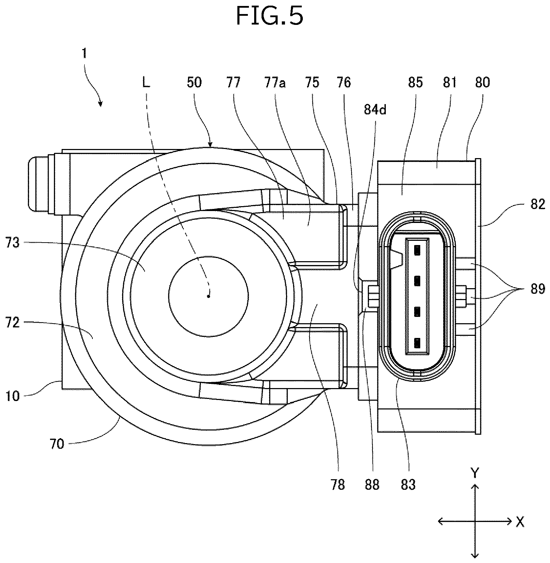

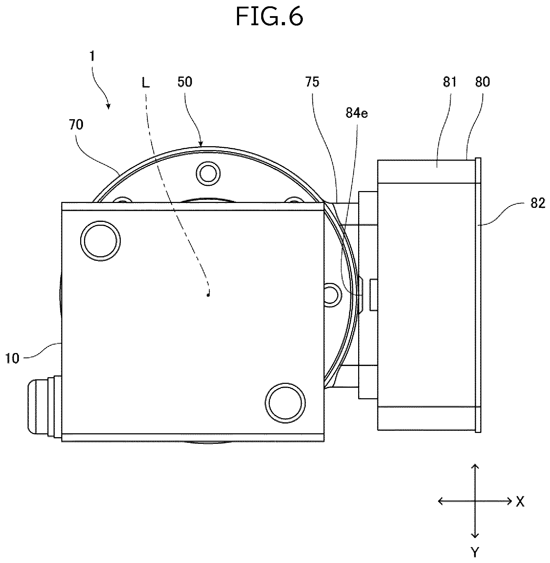

An electric valve according to an embodiment of the present invention is described with reference to Fig. 1 to Fig. 15.

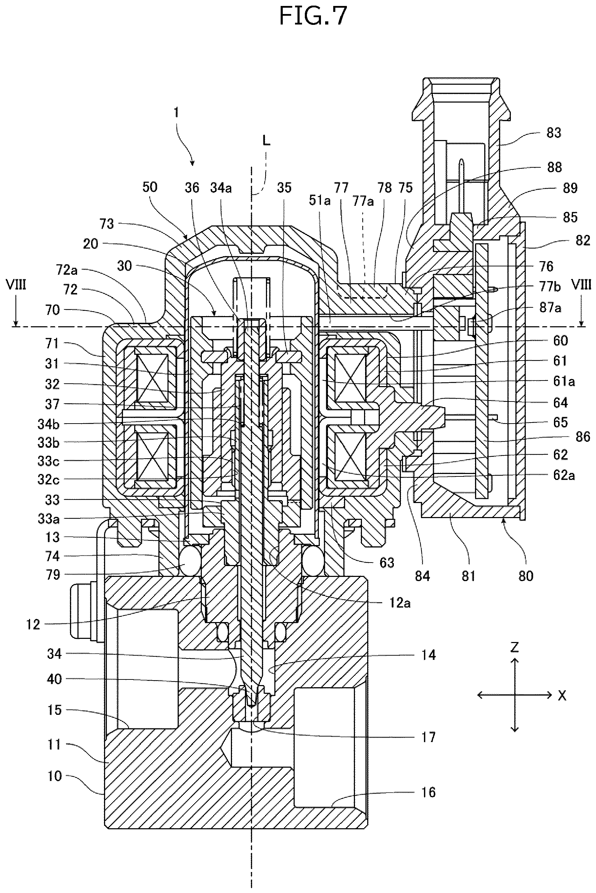

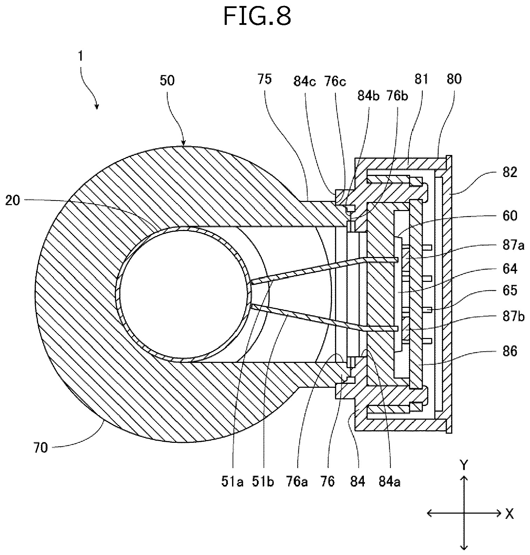

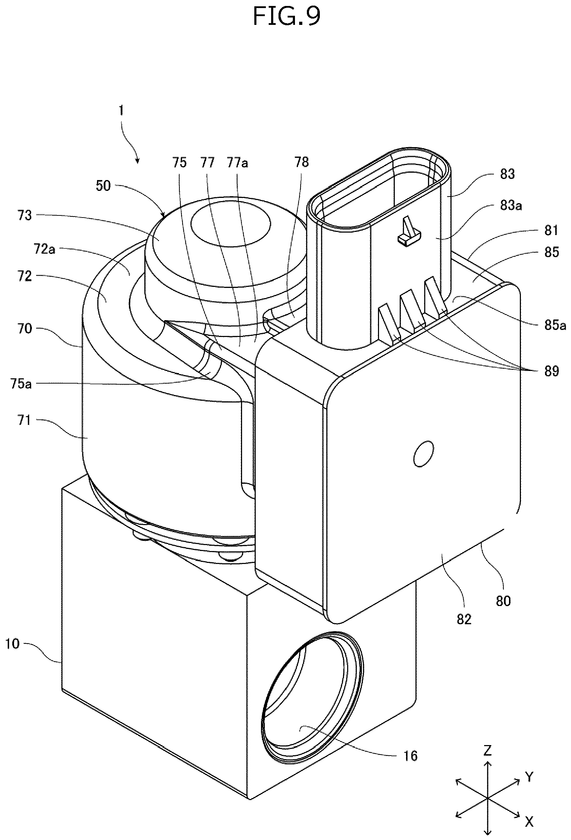

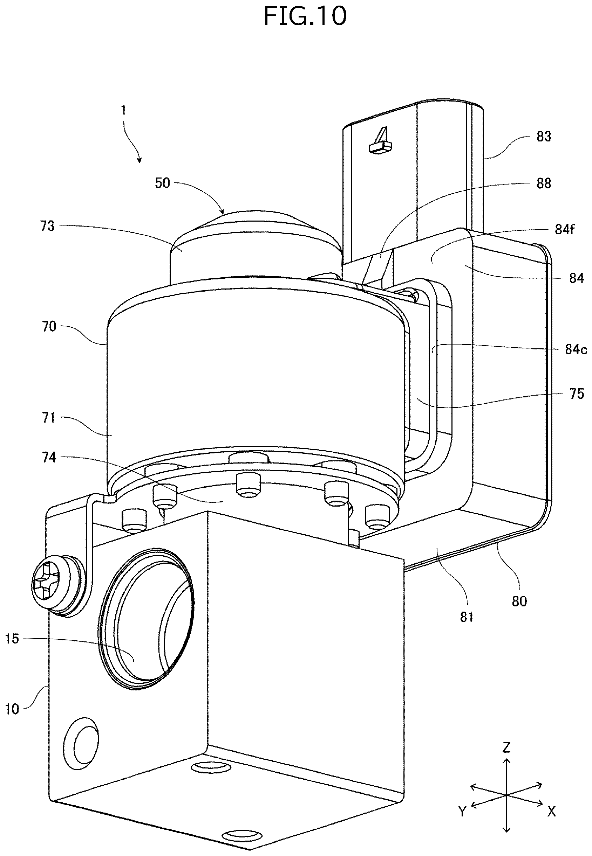

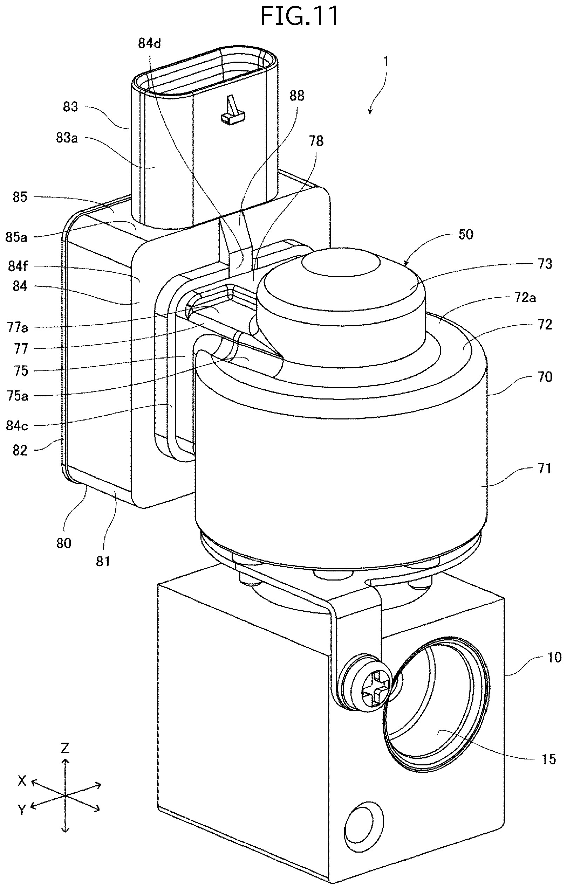

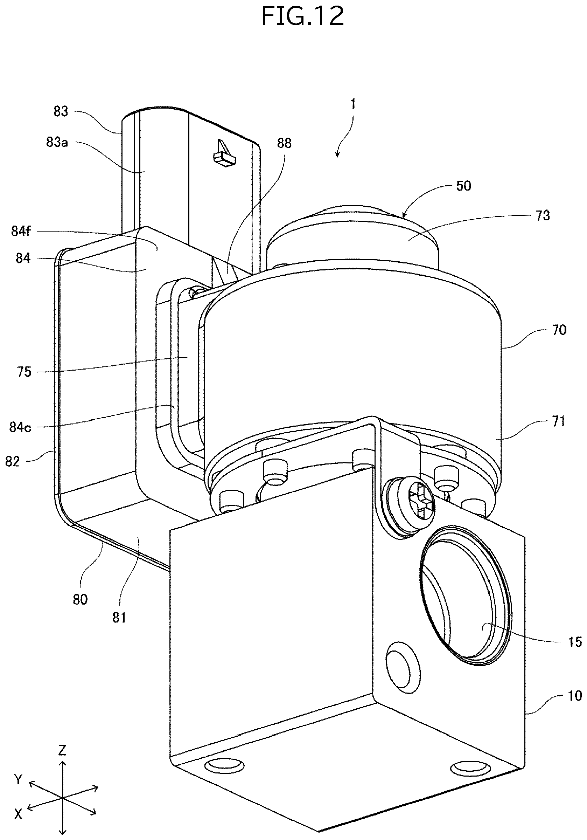

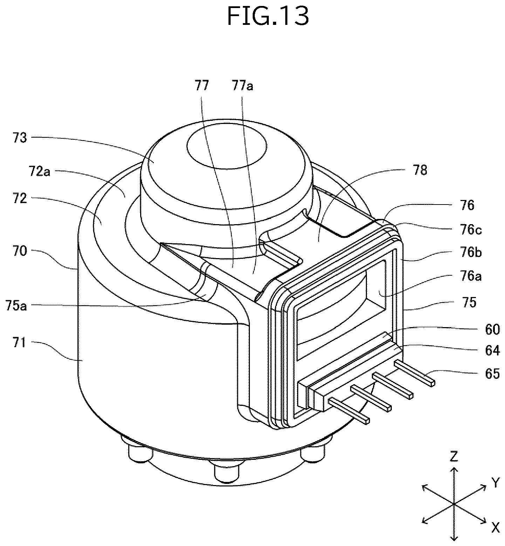

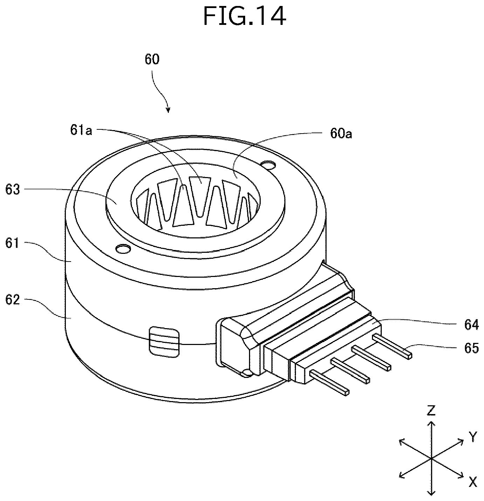

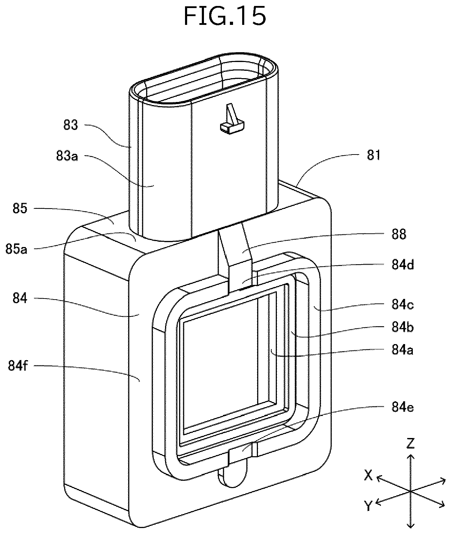

Fig. 1 to Fig. 6 are a front view, a right-side view, a back view, a left-side view, a plan view, and a bottom view of the electric valve according to the embodiment of the present invention. Fig. 7 is a sectional view (longitudinal sectional view) taken along an axis L of the electric valve in Fig. 1. Fig. 8 is a sectional view taken along line VIII-VIII of Fig. 7. In Fig. 8, no members inside a can are illustrated. Fig. 9 is a perspective view of the electric valve in Fig. 1 as viewed from an upper right front side. Fig. 10 is a perspective view of the electric valve in Fig. 1 as viewed from a lower left front side. Fig. 11 is a perspective view of the electric valve in Fig. 1 as viewed from an upper left back side. Fig. 12 is a perspective view of the electric valve in Fig. 1 as viewed from a lower left back side. Fig. 13 is a perspective view of a stator and a housing of a stator unit of the electric valve in Fig. 1. Fig. 14 is a perspective view of the stator of the stator unit of the electric valve in Fig. 1. Fig. 15 is a perspective view of a case body and a connector of the stator unit of the electric valve in Fig. 1. In each figure, an X direction is a left-right direction (lateral direction), a Y direction is a front-back direction, and a Z direction is an up-down direction (direction of the axis L).

As illustrated in each figure, an electric valve 1 includes a valve body 10, a can 20, a driving section 30, a valve member 40, and a stator unit 50.

The valve body 10 is made of metal such as an aluminum alloy. The valve body 10 includes a main body portion 11, a cylindrical portion 12, and a flange portion 13. The main body portion 11 has a rectangular parallelepiped shape. The cylindrical portion 12 projects from the upper surface of the main body portion 11. The cylindrical portion 12 is mounted to the main body portion 11 with a screw structure. The main body portion 11 includes a valve chamber 14 and flow passages 15, 16. The flow passage 15 is connected to the valve chamber 14. The flow passage 16 is connected to the valve chamber 14 via a port 17. The flange portion 13 has an annular plate-like shape. The inner peripheral edge of the flange portion 13 is bonded to the upper end of the cylindrical portion 12.

The can 20 is made of metal such as stainless steel. The can 20 has a circular cylindrical shape that is closed at the upper end portion. The lower end portion of the can 20 is bonded to the outer peripheral edge of the flange portion 13.

The driving section 30 moves the valve member 40 in the up-down direction. The driving section 30 includes a magnet rotor 31, a valve stem holder 32, a guide bush 33, and a valve stem 34.

The magnet rotor 31 has a circular cylindrical shape. The outer diameter of the magnet rotor 31 is slightly smaller than the inner diameter of the can 20. Multiple N poles and multiple S poles are provided on the outer circumferential surface of the magnet rotor 31. The multiple N poles and multiple S poles extend in the up-down direction and are arranged alternately and circumferentially at equal intervals.

The valve stem holder 32 has a circular cylindrical shape that is closed at the upper end. The valve stem holder 32 includes an upper end portion to which a supporting ring 35 is fixed. The valve stem holder 32 is integrally coupled with the magnet rotor 31 via the supporting ring 35. The inner circumferential surface of the valve stem holder 32 has an internal thread 32c.

The guide bush 33 integrally includes a first cylindrical portion 33a and a second cylindrical portion 33b. The outer diameter of the second cylindrical portion 33b is smaller than the outer diameter of the first cylindrical portion 33a. The second cylindrical portion 33b is coaxially connected to the upper end portion of the first cylindrical portion 33a. The outer circumferential surface of the second cylindrical portion 33b has an external thread 33c. The external thread 33c is screwed into the internal thread 32c of the valve stem holder 32. The first cylindrical portion 33a is press-fitted into a fitting hole 12a formed in the cylindrical portion 12 of the valve body 10. The guide bush 33 is coupled to the valve body 10.

The valve stem 34 has a circular columnar shape. The valve stem 34 includes an upper end portion 34a that extends through the valve stem holder 32. A push nut 36 as a retainer is attached to the upper end portion 34a of the valve stem 34. The valve stem 34 extends through the guide bush 33 and the cylindrical portion 12. The lower end portion of the valve stem 34 is disposed in the valve chamber 14. A valve closing spring 37 is disposed between the valve stem holder 32 and a step portion 34b of the valve stem 34. The valve closing spring 37 is a compression coil spring. The valve closing spring 37 pushes the valve stem 34 downward.

The valve member 40 is integrally connected to the lower end portion of the valve stem 34. The valve member 40 is disposed in the valve chamber 14. The driving section 30 moves the valve member 40 in the up-down direction. The movement of the valve member 40 opens and closes the port 17.

The stator unit 50 includes a stator 60, a housing 70, and a case 80.

The stator 60 has a circular cylindrical shape. The stator 60 and the magnet rotor 31 are members of a stepping motor. The stator 60 includes an upper stator 61, a lower stator 62, and a mold 63 made of synthetic resin.

The upper stator 61 and the lower stator 62 are coaxially disposed. The upper stator 61 is in contact with the lower stator 62. The upper stator 61 includes a plurality of claw-pole-type pole teeth 61a. The pole teeth 61a are arranged circumferentially at equal intervals. The lower stator 62 includes a plurality of claw-pole-type pole teeth 62a. The pole teeth 62a are arranged circumferentially at equal intervals. The mold 63 fills the upper stator 61 and the lower stator 62. The mold 63 and the pole teeth 61a, 62a form an inner circumferential surface 60a of the stator 60. The mold 63 includes a terminal supporting portion 64.

The terminal supporting portion 64 extends from the upper stator 61 and the lower stator 62 in the lateral direction (X direction). The terminal supporting portion 64 supports a plurality of terminals 65. The terminals 65 extend from the tip end of the terminal supporting portion 64 in the lateral direction. The terminals 65 are connected to a coil of the upper stator 61 and a coil of the lower stator 62.

The housing 70 is made of synthetic resin. The housing 70 is formed by injection molding. The housing 70 has a mirror-symmetric shape with respect to a plane that includes the axis L and is parallel to an XZ plane. The housing 70 houses the stator 60. The housing 70 integrally includes a peripheral wall portion 71, an upper wall portion 72, a dome portion 73, a tubular portion 74, and a connecting portion 75.

The peripheral wall portion 71 has a circular cylindrical shape. The upper wall portion 72 is connected to the upper end of the peripheral wall portion 71. The dome portion 73 projects upward from the central part of the upper wall portion 72. The can 20 is disposed inside the stator 60 and the dome portion 73. The tubular portion 74 has a circular cylindrical shape with a smaller diameter than the peripheral wall portion 71. The tubular portion 74 extends downward from the peripheral wall portion 71. The tubular portion 74 is disposed around the cylindrical portion 12 of the valve body 10. The tubular portion 74 and the cylindrical portion 12 form a gap in which a seal 79 in an annular shape is disposed. The seal 79 is made of an elastic material such as a rubber material.

The connecting portion 75 has a quadrangular tubular shape extending in the lateral direction (X direction). The connecting portion 75 includes a tip end portion 76 that projects from the peripheral wall portion 71 in the lateral direction. The tip end portion 76 includes a housing opening 76a, a housing bonding surface 76b, and a housing reference surface 76c. The housing opening 76a is an opening in a quadrangular shape. The housing opening 76a faces in the lateral direction (X direction, rightward). The housing bonding surface 76b is a plane in a quadrangular frame shape. The housing bonding surface 76b faces in the same direction as the housing opening 76a. The housing bonding surface 76b is disposed around the housing opening 76a. The housing reference surface 76c is a plane in the quadrangular frame shape. The housing reference surface 76c faces in the same direction as the housing bonding surface 76b. The housing reference surface 76c is disposed around the housing bonding surface 76b. The housing reference surface 76c is disposed closer to the peripheral wall portion 71 than the housing bonding surface 76b is. The terminal supporting portion 64 of the stator 60 and the terminals 65 of the stator 60 project from the housing opening 76a.

The connecting portion 75 has a top plate portion 77 in a flat plate-like shape. The top plate portion 77 projects upward from the upper wall portion 72. The top plate portion 77 includes an upper surface 77a on which a protrusion 78 is formed. The protrusion 78 extends from the dome portion 73 to the tip end portion 76. The protrusion 78 is disposed in the central part of the upper surface 77a in a width direction (Y direction). The top plate portion 77 includes a lower surface 77b that is entirely flat. The lower surface 77b is located at a position higher than an upper surface 72a of the upper wall portion 72. A thickness of the central part (where the protrusion 78 is disposed) of the top plate portion 77 in the width direction is greater than a thickness of both end parts of the top plate portion 77 in the width direction.

A concave surface 75a is formed in a connecting part in which the upper wall portion 72 is connected to the connecting portion 75. The concave surface 75a inhibits the connecting part in which the upper wall portion 72 is connected to the connecting portion 75 from being raised.

The case 80 is made of synthetic resin. The case 80 is formed by injection molding. The case 80 has a mirror-symmetric shape with respect to the plane that includes the axis L and is parallel to the XZ plane. The case 80 includes a case body 81, a lid body 82 and a connector 83. The case body 81 has a rectangular parallelepiped box shape with an opening on the side. The lid body 82 has a flat plate-like shape. The lid body 82 closes the opening on the side of the case body 81. The connector 83 has a tubular shape with an elliptical transverse section. The connector 83 extends upward from the case body 81. The case body 81 and the connector 83 are integrally formed.

The case body 81 houses a circuit board 86. The circuit board 86 is a printed circuit board on which electronic components are mounted. Magnetic sensors 87a, 87b are mounted on the circuit board 86. A microcomputer or the like may be mounted on the circuit board 86 in addition to the magnetic sensors 87a, 87b. The microcomputer may function as a device that calculates a rotational angle of the magnet rotor 31 and a valve opening degree (an opening degree of the port 17) based on output signals from the magnetic sensors 87a, 87b. The terminals 65 of the stator 60 are connected to the circuit board 86.

The case body 81 includes a side wall portion 84 (a first wall portion) on a side opposite to the lid body 82. The side wall portion 84 includes a case opening 84a, a case bonding surface 84b, and a case reference surface 84c. The case opening 84a is an opening in the quadrangular shape that faces in the lateral direction (X direction, leftward). The case opening 84a is connected to the housing opening 76a. The case bonding surface 84b is a plane in the quadrangular frame shape that faces in the same direction as the case opening 84a. The case bonding surface 84b is disposed around the case opening 84a. The case bonding surface 84b is bonded to the housing bonding surface 76b by, for example, infrared welding, ultrasonic welding, or adhesive. The case reference surface 84c is a plane in the quadrangular frame shape that faces in the same direction as the case bonding surface 84b. The case reference surface 84c is disposed around the case bonding surface 84b. The case reference surface 84c is disposed closer to the peripheral wall portion 71 than the case bonding surface 84b is. A first slot 84d is formed in the central part of the upper side of the case reference surface 84c. A second slot 84e is formed in the central part of the lower side of the case reference surface 84c. The case reference surface 84c comes into contact with the housing reference surface 76c.

The case body 81 includes an upper wall portion 85 (a second wall portion) that is connected to the upper end of the side wall portion 84. The connector 83 extends upward from an outer surface 85a of the upper wall portion 85. A direction of an axis of the connector 83 is parallel to the axis L. A first rib 88 is formed on an outer surface 84f of the side wall portion 84. The first rib 88 extends between the first slot 84d of the upper side of the case reference surface 84c and a connecting part in which the side wall portion 84 is connected to the upper wall portion 85. A second rib 89 is formed between the outer surface 85a of the upper wall portion 85 and an outer circumferential surface 83a of the connector 83. The second rib 89 has a plate-like shape that is a right triangle in front view. The first rib 88 and the second rib 89 are opposed in the lateral direction when viewed from above, and the connector 83 is disposed between the first rib 88 and the second rib 89.

The stator unit 50 includes magnetic transmission members 51a, 51b. The magnetic transmission members 51a, 51b each have a band plate-like shape. The magnetic transmission members 51a, 51b extend through the housing opening 76a and the case opening 84a. The magnetic transmission member 51a includes a first end that faces to the outer circumferential surface of the can 20. The magnetic transmission member 51b includes a first end that faces to the outer circumferential surface of the can 20. The magnetic transmission member 51a includes a second end that faces to a magnetic detection surface of the magnetic sensor 87a. The magnetic transmission member 51b includes a second end that faces to a magnetic detection surface of the magnetic sensor 87b. The magnetic transmission member 51a transmits the magnetism of the N and S poles of the magnet rotor 31 to the magnetic sensor 87a. The magnetic transmission member 51b transmits the magnetism of the N and S poles of the magnet rotor 31 to the magnetic sensor 87b.

In the electric valve 1, the respective axes of the cylindrical portion 12 of the valve body 10, the port 17, the can 20, the magnet rotor 31, the valve stem holder 32, the guide bush 33, the valve stem 34, the valve member 40, the stator 60 (the upper stator 61 and the lower stator 62), and the housing 70 (the dome portion 73 and the tubular portion 74) are aligned with the axis L.

The operation of the electric valve 1 is described below.

In the electric valve 1, a current is applied to the upper stator 61 and the lower stator 62 to rotate the magnet rotor 31 in one direction. The valve stem holder 32 rotates together with the magnet rotor 31. A screw-feed action between the internal thread 32c of the valve stem holder 32 and the external thread 33c of the guide bush 33 moves the valve stem holder 32 downward. The valve stem 34 moves downward together with the valve stem holder 32, and the valve member 40 closes the port 17 (valve-closing state).

In the electric valve 1, a current is applied to the upper stator 61 and the lower stator 62 to rotate the magnet rotor 31 in the other direction. The valve stem holder 32 rotates together with the magnet rotor 31. The screw-feed action between the internal thread 32c of the valve stem holder 32 and the external thread 33c of the guide bush 33 moves the valve stem holder 32 upward. The valve stem 34 moves upward together with the valve stem holder 32, and the valve member 40 opens the port 17 (valve-opening state).

As described above, the electric valve 1 of the present embodiment includes the stator unit 50. The stator unit 50 includes the stator 60, the housing 70 that houses the stator 60, and the case 80 that is bonded to the housing 70. The housing 70 integrally includes the peripheral wall portion 71, the upper wall portion 72 that is connected to the peripheral wall portion 71, the dome portion 73 that projects upward from the upper wall portion 72, and the connecting portion 75 in the quadrangular tubular shape that extends in the lateral direction. The connecting portion 75 includes the tip end portion 76 and the top plate portion 77. The tip end portion 76 projects from the peripheral wall portion 71 in the lateral direction. The case 80 is bonded to the tip end portion 76. The top plate portion 77 has a flat plate-like shape. The top plate portion 77 projects upward from the upper wall portion 72. The protrusion 78 is provided in the central part of the upper surface 77a of the top plate portion 77 in the width direction and extends between the dome portion 73 and the tip end portion 76.

According to the electric valve 1, the central part of the top plate portion 77 in the width direction has the thickness greater than that of the end parts of the top plate portion 77 in the width direction. As a result, a resin is likely to flow into the central part of the top plate portion 77 in the width direction during formation of the housing 70 by injection molding. Therefore, the resin flows into the central part of the top plate portion 77 in the width direction, then the resin spreads to the both end parts of the top plate portion 77 in the width direction, and it is possible to suppress formation of a weld line in the central part.

The concave surface 75a is provided in the connecting part in which the upper wall portion 72 of the housing 70 is connected to the connecting portion 75 of the housing 70 and extends in the lateral direction. With this configuration, the connecting part has a small thickness and sink marks of the resin in the connecting part can be suppressed compared with a configuration with a raised connecting part, in which the upper wall portion 72 is connected to the connecting portion 75.

The tip end portion 76 of the connecting portion 75 includes the housing bonding surface 76b in the quadrangular frame shape, and the housing reference surface 76c in the quadrangular frame shape that encloses the housing bonding surface 76b. The case 80 includes the case bonding surface 84b in the quadrangular frame shape, and the case reference surface 84c that encloses the case bonding surface 84b. The case bonding surface 84b is bonded to the housing bonding surface 76b. The case reference surface 84c is in contact with the housing reference surface 76c. The first slot 84d is provided in the central part of the upper side of the case reference surface 84c. The second slot 84e is provided in the central part of the lower side of the case reference surface 84c. The weld line is likely to be formed in the central part of the tip end portion 76 of the connecting portion 75 in the width direction (Y direction). Even if the central part of the upper side of the housing reference surface 76c and the central part of the lower side of the housing reference surface 76c are raised by weld lines, the first slot 84d in the central part of the upper side of the case reference surface 84c and the second slot 84e in the central part of the lower side of the case reference surface 84c can inhibit portions of the housing reference surface 76c that are raised from coming into contact with the case reference surface 84c. Therefore, the housing reference surface 76c is in proper contact with the case reference surface 84c, and the case 80 can be appropriately bonded to the housing 70.

The lower surface 77b of the top plate portion 77 is located at the position higher than the upper surface 72a of the upper wall portion 72. With this configuration, the connecting portion 75 is enlarged in an up-down direction, and the tip end portion 76 of the connecting portion 75 can be enlarged. Therefore, the housing bonding surface 76b and the case bonding surface 84b are enlarged, resulting in firmer bonding of the case 80 to the housing 70.

The case 80 integrally includes the case body 81 in the rectangular box shape and the connector 83 in the elliptical tubular shape. The case body 81 includes the side wall portion 84 and the upper wall portion 85. The side wall portion 84 includes the case bonding surface 84b and the case reference surface 84c. The upper wall portion 85 includes the outer surface 85a from which the connector 83 extends. The upper wall portion 85 is connected to the side wall portion 84. The first rib 88 is provided on the outer surface 84f of the side wall portion 84 and extends between the case reference surface 84c and the connection part in which the side wall portion 84 is connected to the upper wall portion 85. The second rib 89 is provided between the outer surface 85a of the upper wall portion 85 and the outer circumferential surface 83a of the connector 83. The connector 83 is disposed between the first rib 88 and the second rib 89 when viewed from above (the direction of the axis of the connector 83). With this configuration, it is possible to inhibit the connector 83 from tilting with respect to the case body 81 when the resin cures during formation of the case 80 by injection molding.

The embodiment of the present invention is described above. The present invention, however, is not limited to the embodiment. Embodiments obtained by appropriately adding, removing, or modifying components according to the embodiment described above by a person skilled in the art, and an embodiment obtained by appropriately combining features of the embodiment are included in the scope of the present invention as long as they have the gist of the present invention.

### Reference Signs List

1 ... electric valve, 10 ... valve body, 11 ... main body portion, 12 ... cylindrical portion, 12a ... fitting hole, 13 ... flange portion, 14 ... valve chamber, 15, 16 ... flow passage, 17 ... port, 20 ... can, 30 ... driving section, 31 ... magnet rotor, 32 ... valve stem holder, 32c ... internal thread, 33 ... guide bush, 33a ... first cylindrical portion, 33b ... second cylindrical portion, 33c ... external thread, 34 ... valve stem, 34a ... upper end portion, 34b ... step portion, 35 ... supporting ring, 36 ... push nut, 37 ... valve closing spring, 40 ... valve member, 50 ... stator unit, 51a, 51b ... magnetic transmission member, 60 ... stator, 60a ... inner circumferential surface, 61 ... upper stator, 61a ... pole teeth, 62 ... lower stator, 62a... pole teeth, 63 ... mold, 64 ... terminal supporting portion, 65 ... terminal, 70 ... housing, 71 ... peripheral wall portion, 72 ... upper wall portion, 72a ... upper surface, 73 ... dome portion, 74 ... tubular portion, 75 ... connecting portion, 75a ... concave surface, 76 ... tip end portion, 76a ... housing opening, 76b ... housing bonding surface, 76c ... housing reference surface, 77 ... top plate portion, 77a ... upper surface, 77b ... lower surface, 78 ... protrusion, 79 ... seal, 80 ... case, 81 ... case body, 82 ... lid body, 83 ... connector, 83a ... outer circumferential surface, 84 ... side wall portion, 84a ... case opening, 84b ... case bonding surface, 84c ... case reference surface, 84d ...first slot, 84e ... second slot, 84f ... outer surface, 85 ... upper wall portion, 85a ... outer surface, 86 ... circuit board, 87a, 87b ... magnetic sensor, 88 ... first rib, 89 ... second rib

## Claims

1. A stator unit comprising:
a stator;
a housing that houses the stator and is made of resin; and
a case that is bonded to the housing and is made of resin,
wherein the housing integrally includes a peripheral wall portion, an upper wall portion that is connected to the peripheral wall portion, a dome portion that projects upward from the upper wall portion, and a connecting portion in a quadrangular tubular shape that extends in a lateral direction,
wherein the connecting portion includes a tip end portion to which the case is bonded, and a top plate portion in a flat plate-like shape that projects upward from the upper wall portion, the tip end portion projecting from the peripheral wall portion in the lateral direction, and
wherein a protrusion is provided in a central part of an upper surface of the top plate portion in a width direction and extends between the dome portion and the tip end portion.

2. The stator unit according to Claim 1, wherein a concave surface is provided in a connecting part in which the upper wall portion is connected to the connecting portion and extends in the lateral direction.

3. The stator unit according to Claim 1 or Claim 2,
wherein the tip end portion of the connecting portion includes a housing bonding surface in a quadrangular frame shape and a housing reference surface in a quadrangular frame shape that encloses the housing bonding surface,
wherein the case includes a case bonding surface in a quadrangular frame shape that is bonded to the housing bonding surface, and a case reference surface that encloses the case bonding surface and is in contact with the housing reference surface, and
wherein a first slot is provided in a central part of an upper side of the case reference surface, and a second slot is provided in a central part of a lower side of the case reference surface.

4. The stator unit according to Claim 3, wherein a lower surface of the top plate portion is located at a position higher than an upper surface of the upper wall portion.

5. The stator unit according to Claim 3 or Claim 4,
wherein the case integrally includes a case body in a box shape and a connector in a tubular shape,
wherein the case body includes a first wall portion that includes the case bonding surface and the case reference surface, and a second wall portion from which the connector extends, the second wall portion being connected to the first wall portion of the case body,
wherein a first rib is provided on an outer surface of the first wall portion and extends between the case reference surface and a connecting part in which the first wall portion is connected to the second wall portion,
wherein a second rib is provided between an outer surface of the second wall portion and an outer circumferential surface of the connector, and
wherein when viewed in a direction of an axis of the connector, the connector is between the first rib and the second rib.

6. An electric valve comprising:
a valve body;
a can that is bonded to the valve body; and
a stator unit in which the can is housed,
wherein the stator unit is the stator unit according to any one of Claim 1 to Claim 5.
